Europäisches Patentamt

European Patent Office

Office européen des brevets

(19)

(11) Veröffentlichungsnummer: **0 195 297 B1**

(12) # EUROPÄISCHE PATENTSCHRIFT

(45) Veröffentlichungstag der Patentschrift: 02.05.91

(51) Int. Cl.⁵: **C02F 1/52**, C02F 1/20, B01D 53/14

(21) Anmeldenummer: 86102727.4

(22) Anmeldetag: 03.03.86

(54) **Verfahren und Vorrichtung zum Schliessen der Kreisläufe bei der Reinigung von Wasser und Abwasser.**

(30) Priorität: 06.03.85 DE 3507839
23.12.85 DE 3545839

(43) Veröffentlichungstag der Anmeldung:
24.09.86 Patentblatt 86/39

(45) Bekanntmachung des Hinweises auf die Patenterteilung:
02.05.91 Patentblatt 91/18

(84) Benannte Vertragsstaaten:
AT BE CH FR GB IT LI LU NL SE

(56) Entgegenhaltungen:
EP-A- 0 064 279
DE-A- 2 603 773
DE-B- 1 136 285
US-A- 3 385 785
US-A- 3 725 266

(73) Patentinhaber: **Käuffer, Karl Clemens**
**Provinostrasse 52**
**W-8900 Augsburg(DE)**

(72) Erfinder: **Käuffer, Karl Clemens**
**Provinostrasse 52**
**W-8900 Augsburg(DE)**

(74) Vertreter: **Brose, D. Karl**
**PATENTANWÄLTE BROSE & BROSE Wiener**
**Strasse 2**
**W-8023 München-Pullach(DE)**

EP 0 195 297 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Schließen der Flockungsmittel-Kreisläufe bei Wässern und Abwässern, welche durch Flockung eliminierbare Abfallstoffe enthalten, wie diese in den meisten Industriezweigen und in den Kommunen anfallen.

Es ist bekannt, daß die erheblichen Mengen von Metallhydroxydschlämmen, wie sie bei der chemischen und chemisch-biologischen Reinigung der Abwässer von Kommunen bzw. Unternehmen anfallen, ein ständig steigendes Problem darstellen. Einerseits sind, falls derartige Schlämme toxische Metalle, wie Zink oder Cadmium, enthalten, diese nur auf Sonderdeponien abzulagern, wobei man heutzutage mit durchschnittlichen Deponiekosten von etwa 350,-- bis 400,-- DM pro Tonne rechnen muß. Andere Schlämme ohne derartige toxische Bestandteile sollen möglichst für eine Schlammverbrennung oder Pyrolyse geeignet sein, d.h. einen möglichst geringen Salzgehalt aufweisen. Bei der Verbrennung oder Pyrolyse dürfen darüber hinaus keine schädlichen Stoffe entstehen. Um derartige Schlämme zu erhalten, werden nach bekannten Verfahren Wasserinhaltsstoffe enthaltende Wässer und Abwässer mittels Eisenhydrogencarbonat versetzt, um hierdurch die Schlämme auszuflocken, so daß eine Abtrennung des Reinwassers möglich ist. Bei den üblichen Verfahren gehen daher die verwendeten Flockungsmittel mit dem Schlamm verloren, wobei entsprechend die Schlammenge um die eingesetzten Flockungsmittelmengen vergrößert werden. Wegen der ständig steigenden Umweltschutzauflagen besteht darüber hinaus in der Industrie das Bestreben, Industrieabwässer möglichst im geschlossenen Kreislauf zu verwenden, d.h. nach Reinigung wieder in der Produktion einsetzen zu können.

Zur Lösung der vorstehend beschriebenen Probleme ist aus der EP-A1 0 064 279 bereits ein Verfahren mit den folgenden Schritten bekannt:

a) Mischen des Wassers oder Abwassers mit einer Metallsalzlösung als Flockungsmittel,

b) Entgasen des Wassers oder Abwassers, wobei das erhaltene Gas aufgefangen wird, sofern das Verfahren mit $CO_2$ durchgeführt wird,

c) Abtrennen des Reinwassers von der ausgeflockten Mischung aus Metallhydroxyd und organischem Schlamm,

d) Senkung des pH-Wertes der Mischung bis zur Lösung der Metallsalze, wobei diese Metallsalzlösung als Flockungsmittel in den Kreislauf zum Verfahrensschritt a) zurückgeführt wird und der Restschlamm in einen Waschbehälter überführt wird.

Bei diesem Verfahren verbleiben jedoch noch erhebliche Mengen von Flockungsmittel und Salz in dem Schlamm. Es entsteht daher ein laufender Verlust an Flockungsmittel, der Flockungsmittelkreislauf ist somit nicht vollständig geschlossen, da sich das Flockungsmittel nicht vollständig zurückgewinnen läßt. Gleichzeitig enthält der nach diesem Verfahren gewonnene Schlamm noch so große Salzmengen; daß diese aufgrund der inzwischen erheblich schärfer gewordenen Umweltschutzbestimmungen ein wesentliches Hindernis bei der Pyrolyse oder Verbrennung des Schlammes dargestellt haben.

Ausgehend von diesem Hintergrund liegt der Erfindung die Aufgabe zugrunde, ein Verfahren der eingangs genannten Art zu schaffen, welches als Endprodukt einen nahezu vollständig metallsalzfreien organischen Schlamm mit bester Eignung für die Verbrennung oder Pyrolyse ergibt und welches darüber hinaus unter Erschließung der wirtschaftlichen Anwendung neuer Technologien eine größtmögliche Rückgewinnung der eingesetzten Stoffe gewährleistet.

Diese Aufgabe wird erfindungsgemäß beim Verfahren der eingangs genannten Art im wesentlichen durch die Hinzufügung folgender Verfahrensschritte gelöst:

e) Auswaschen des Restschlamms mit Waschwasser,

f) Trennen des Restschlamms von dem Waschwasser,

g) Erhöhung des pH-Wertes des Waschwassers bis zur Fällung der im Waschwasser gelösten Metallhydroxyde als Metallhydroxydschlamm, und

h) Beimischung des Metallhydroxydschlammes zu dem Abwasser-Flockungsmittelgemisch zwischen den Verfahrensschritten b) und c).

Durch die Erfindung werden abgesehen von der vollständigen Lösung der gestellten Aufgabe erhebliche Vorteile erzielt.

Zunächst wird ein nahezu vollständiger Flockungsmittel-Kreislauf hergestellt, da die selbst die Reste von nichtgelösten Metallhydroxyden aus dem Waschwasser rückgewonnen werden.

Bei dem erfindungsgemäßen Verfahren wird beim Flockungsmittel ein Kreislaufschluß bis zu 85 % erzielt. Da das Flockungsmittel, welches im Kreislauf geführt wird, nach Erfüllung seiner Aufgabe immer einmal in gelöster Phase vorliegt, können in wirtschaftlicher Weise zusätzliche Aufgaben gelöst werden, wie beispielsweise die selektive Entfernung von Schwermetallionen aus dem Kreislauf, wie dies weiter unten noch näher erläutert ist. Hierdurch lassen sich Sondermüllschlämme vermeiden, so daß auch für die erheblich reduzierten Schlammengen noch zusätzliche Deponiekosten gespart werden können, indem auch diese normal deponiert oder einer Pyrolyse bzw. Verbrennung unterzogen werden können.

Durch diese Besonderheit läßt sich auch beispielsweise in der Klärtechnik eine dritte Reinigungsstufe einführen, in welcher beispielsweise eine Fällung zur Phosphatentfernung wirtschaftlich möglich ist. Ein weiteres hervorragendes Anwendungsgebiet der vorliegenden Erfindung ist die Nachrüstung vorhandener überlasteter Kläranlagen, bei welchen die Schlammengen dadurch bis zu 80 % abgebaut werden können. Dies hat die Folge, daß die Faultürme und ähnliche Anlagen entlastet werden, die Grenzwerte des Umweltschutzes sich leichter erreichen lassen und darüber hinaus auch hier Ersparnisse bei der Deponie auftreten.

Durch den gelösten Zustand des Flockungsmittels ist ferner auch eine Schwefelrückgewinnung möglich.

Abgesehen von weiteren in den Unteransprüchen gekennzeichneten, vorteilhaften Ausgestaltungen der Erfindung besteht eine besonders bevorzugte Ausführungsform darin, daß zur Senkung des pH-Wertes die Produkte einer Rauchgaswäsche verwendet werden, wozu beispielsweise das von der Schlammverbrennung oder Pyrolyse stammende Rauchgas verwendet werden kann. Hierdurch lassen sich die Kosten der Ansäuerung ebenfalls senken, wobei $CO_2$ im Kreislauf geführt werden kann. Da man ohnehin bevorzugt eine Rauchgaswäsche verwendet, ist es gleichzeitig möglich, das Rauchgas zusätzlich zu entsticken.

Weitere vorteilhafte Einzelheiten und Ausgestaltungen der Erfindung ergeben sich aus den Unter- und Nebenansprüchen sowie aus der folgenden Beschreibung, in welcher die Erfindung anhand von in den Zeichnungen beispielhaft veranschaulichten Ausführungsformen näher erläutert wird. Es zeigt:

Fig. 1 ein Blockdiagramm einer ersten Ausführungsform des erfindungsgemäßen Verfahrens;

Fig. 2 eine Fig. 1 entsprechende Ausführungsform, bei welcher zusätzlich eine Rauchgaswäsche zur Anwendung gelangt;

Fig. 3 die Ausführungsform gemäß Fig. 2 mit zusätzlicher Rauchgasentstickung;

Fig. 4 eine weitere Ausführungsform des erfindungsgemäßen Verfahrens in Form eines Blockdiagramms, bei welcher zusätzlich eine Abtrennung toxischer Metalle und von Phosphaten vorgesehen ist; und

Fig .5 eine schematische Darstellung einer Vorrichtung zur Durchführung des erfindungsgemäßen Verfahrens.

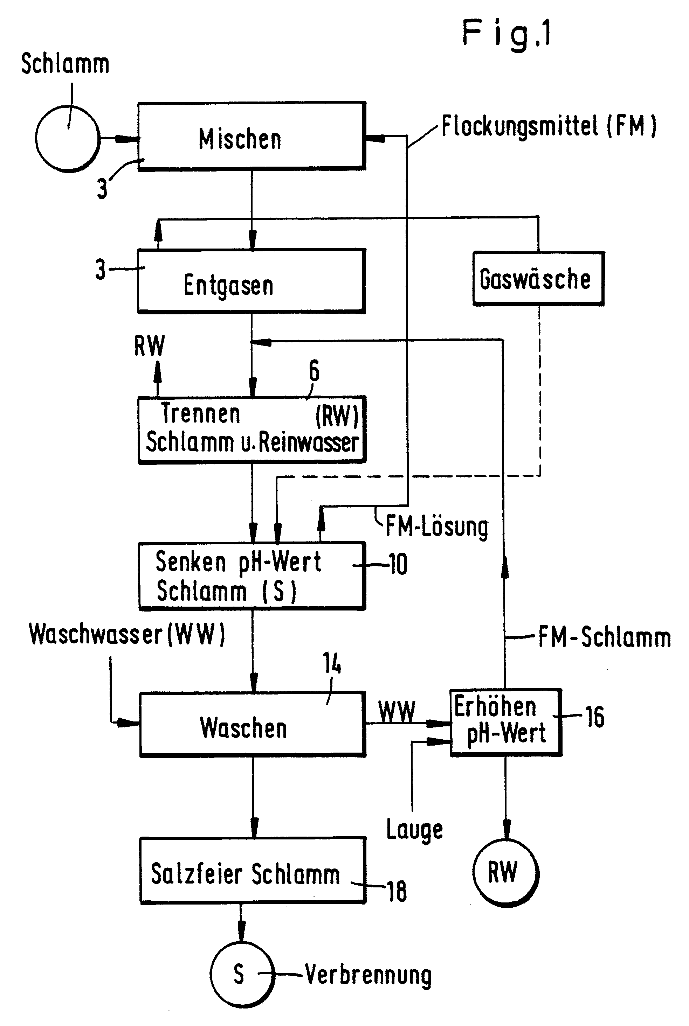

Bei der Ausführungsform gemäß Fig 1 wird der Abwasserschlamm bzw. das Abwasser selbst zunächst mit einem Flockungsmittel vermischt, bei welchem es sich um eine Metallsalzlösung handelt. Diese Mischung wird in eine Flockulationseinrichtung überführt, wo eine Entgasung erfolgt. Durch diese Entgasung steigt der pH-Wert der Mischung, wodurch die Ausflockung erfolgt. Daher wird diese Stufe als Flockulationseinrichtung oder Flockulatur bezeichnet. Die Entgasung kann beispielsweise durch Aufbringen eines Vakuums oder durch Strippen erfolgen. Das Gas wird hierbei zur weiteren Verwendung aufgefangen.

Anschließend erfolgt eine Trennung von Schlamm und Reinwasser (RW), wobei das Reinwasser abgezogen wird. Der Schlamm besteht in dieser Stufe aus den organischen Bestandteilen und den ausgeflockten Metallhydroxyden. In der nächsten Stufe wird der pH-Wert dieser Mischung so weit gesenkt bis die Metallsalze, d. h. die Metallhydroxyde in Lösung gehen, wobei aus dieser Stufe diese Metallsalzlösung als Flockungsmittel (FM) in die Mischstufe zurückgeführt wird. Das Flockungsmittel durchläuft somit im wesentlichen immer den Kreis zwischen Mischen, Entgasen, Trennen und pH-Wert-Senkung, wobei es immer wieder durch Ansäuern in Lösung gebracht wird. Hierzu kann jede beliebige Säure dienen, wobei jedoch Kohlensäure oder Schwefelsäure aus weiter unten stehenden Gründen bevorzugt sind. Zu diesem Zweck kann beispielsweise, wie in Fig. 1 angedeutet, das in der Entgasungsstufe gewonnene Gas einer Gaswäsche unterzogen werden, so daß $CO_2$ mit zur Senkung des pH-Wertes des Schlamms herangezogen werden kann. In dieser Stufe können selbstverständlich auch andere Säuren zugeführt werden.

Nachdem das Flockungsmittel durch Ansäuern in Lösung gegangen ist, wird der im wesentlichen aus organischen Bestandteilen bestehende Schlamm in die Waschstufe überführt und dort mit Waschwasser behandelt. Durch das Waschen wird der Rest der Metallsalze in das Waschwasser aufgenommen, so daß ein salzfreier Schlamm aus der Waschstufe abgeführt werden kann. Ein derartiger salzfreier Schlamm kann ohne Schwierigkeiten deponiert oder, wie angedeutet, durch Pyrolyse verbrannt werden.

Das Waschwasser selbst wird in der Waschstufe abgetrennt und in einer weiteren Stufe mittels einer Lauge behandelt, um den pH-Wert so weit zu erhöhen, daß die im Waschwasser gelösten Metallsalze als ein Metallhydroxydschlamm ausfallen. Der Metallhydroxydschlamm wird vom Reinwasser in dieser Stufe abgetrennt und in den Kreislauf zwischen dem Entgasen und dem Trennen von Schlamm und Reinwasser zurückgeführt. Durch diese Verfahrensweise wird nahezu das gesamte Flockungsmittel wiedergewonnen, da die aus dem Waschwasser rückgewonnenen Flockungsmittelreste den oben beschriebenen Flockungsmittel-Kreislauf ergänzen.

Zur sachgerechten und ausreichenden Absenkung des pH-Wertes können selbstverständlich bei sämtlichen Verfahrensvarianten zusätzliche Vorkehrungen getroffen sein, um Säure zuzuführen. Bevorzugt ist es jedoch, die Säureionen aus dem Verfahren selbst zu gewinnen, so daß neben dem Flockungsmittel-Kreislauf quasi auch ein Säurekreislauf hergestellt wird.

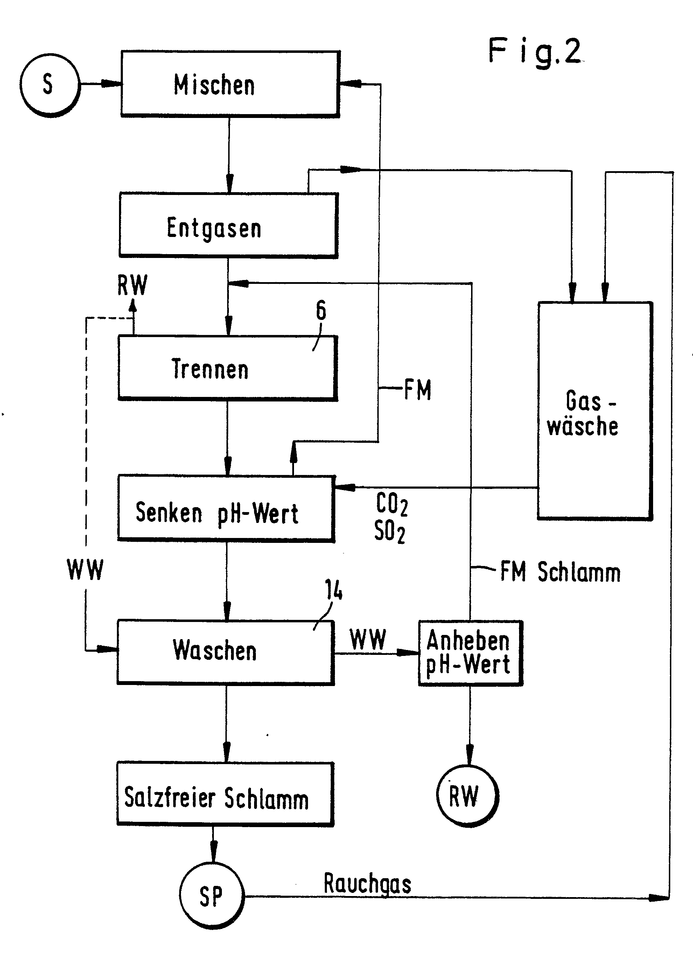

Eine derartige Verfahrensvariante ist ebenfalls in Form eines Blockdiagramms in Fig. 2 gezeigt. Wie veranschaulicht, werden hierbei die notwendigen Säureionen zum Ansäuern des aus organischen Schlammbestandteilen und Metallhydroxyden bestehenden Schlammgemisches durch eine Rauchgaswäsche gewonnen, wobei es sich bei dem Rauchgas um ein beliebiges Rauchgas oder bei einem geschlossenen System um das Rauchgas aus der Schlammverbrennung (SP) handeln kann.

Wie gezeigt, wird hierbei durch eine Stufe der Gaswäsche das Rauchgas zusammen mit dem in der Entgasungsstufe gewonnenen Gas behandelt und $CO_2$ und $SO_2$ ausgewaschen und zum Senken des pH-Wertes herangezogen.

Durch die Rauchgaswäsche, d. h. durch Auswaschen von $CO_2$ und $SO_2$ kann praktisch ohne zusätzliche Kosten der gesamte Säurebedarf des Verfahrens gedeckt werden.

Da ferner bei dem erfindungsgemäßen Verfahren ohnehin eine Gaswäsche durchgeführt wird und das Flockungsmittel in der gelösten Phase umgewälzt wird, läßt sich ohne Schwierigkeiten zusätzlich eine Rauchgasentstickung durchführen, welche beispielsweise durch eine ebenfalls im Kreislauf geführte Dithionitwäsche erfolgen kann. Ohen diese Voraussetzungen wäre eine Rauchgasentstickung unwirtschaftlich.

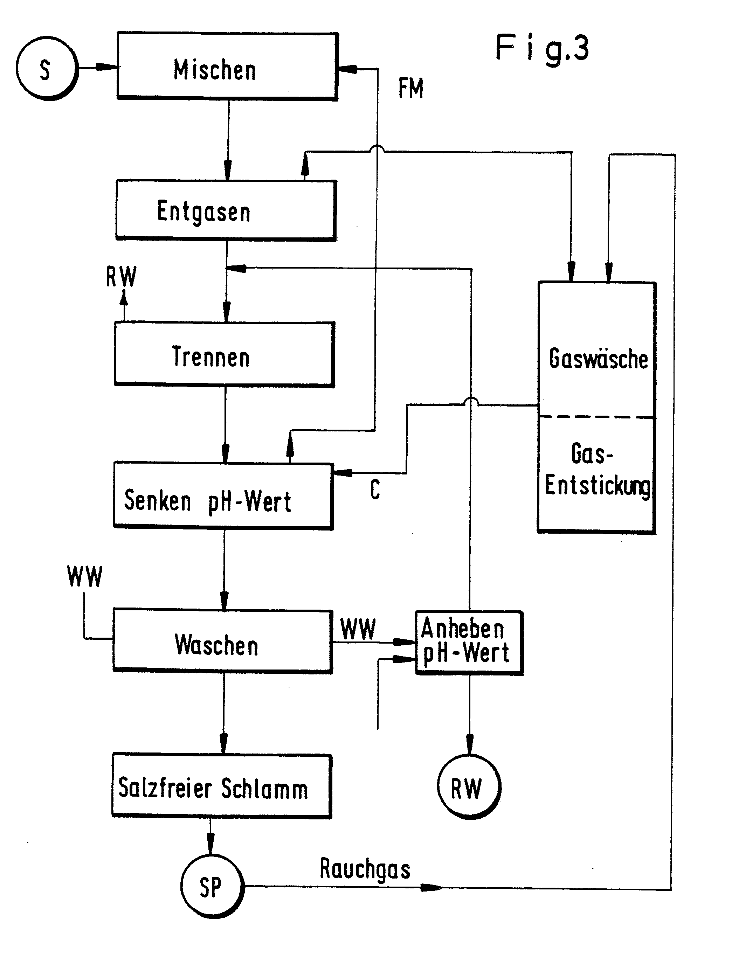

Diese Verfahrensvariante ist in Fig. 3 ebenfalls als Blockdiagramm veranschaulicht.

Da, wie schon erwähnt, nach dem Ansäuern das Flockungsmittel auf jeden Fall in einer gelösten Phase an den Anfang des Verfahrens zurückgeführt wird, ist es erfindungsgemäß möglich, zur Vermeidung von Sondermüllschlämmen ohne Schwierigkeiten toxische Schwermetallionen abzutrennen.

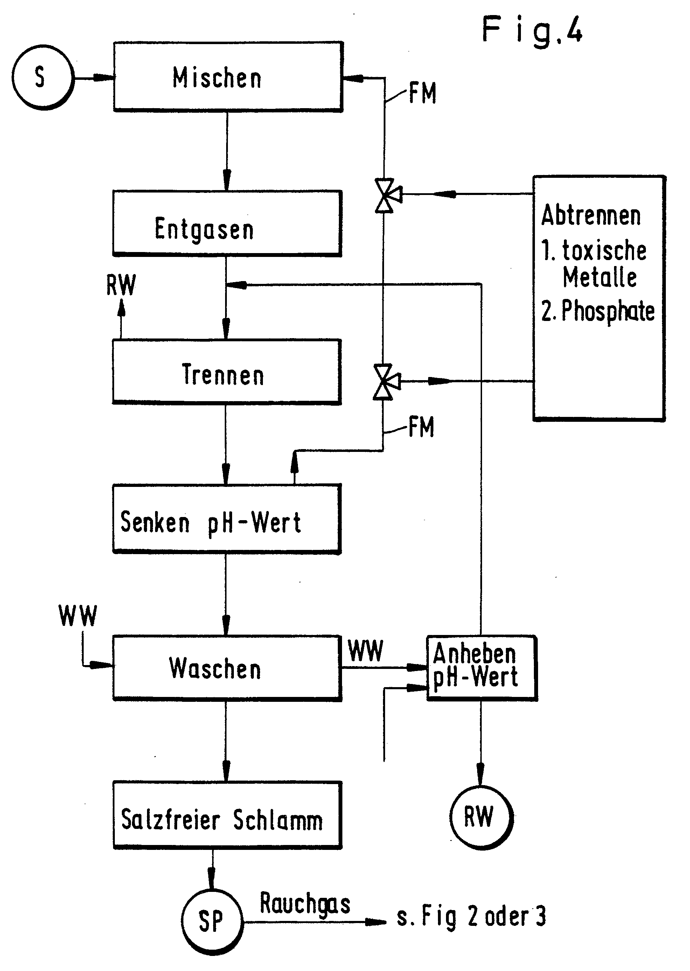

Diese Verfahrensvariante ist in Fig. 4 ebenfalls als Blockdiagramm veranschaulicht, wobei bei dieser Ausführungsform zusätzlich auch die Rauchgaswäsche gemäß Fig. 2 oder 3 zur Anwendung gelangen kann.

Wie veranschaulicht, kann hier in den Flockungsmittelkreislauf eingegriffen werden, indem dieser in der Phase, in welcher das Flockungsmittel gelöst ist, zum Abtrennen der toxischen Metalle, zur Phosphatfällung umgeleitet werden kann.

Die Abtrennung der toxischen Metalle kann beispielsweise elektrolytisch oder durch chemische Fällung erfolgen. Falls als Flockungsmittel Aluminium-oder Eisensalze verwendet werden, können die Schwermetall-Ionen auch dadurch abgetrennt werden, daß die Aluminium- oder Eisensalze ausgeflockt und nach Abtrennung wieder gelöst werden, während die Schwermetall-Ionen in der ursprünglichen Lösung verbleiben. Die wiedergelösten Salze werden dann an den Anfang des Verfahrens als Flockungsmittel zurückgeführt.

Es ist offensichtlich, daß durch die obenstehenden Ausführungsformen unter wirtschaftlichem Aspekt Verfahrenstechnologien anwendbar werden, welche für sich allein genommen unwirtschaftlich wären. Durch die Führung der wesentlichen Bestandteile, abgesehen vom eigentlichen Verfahrensprodukt des salzfreien Schlammes im Kreislauf, steigt der Wirkungsgrad des Verfahrens erheblich.

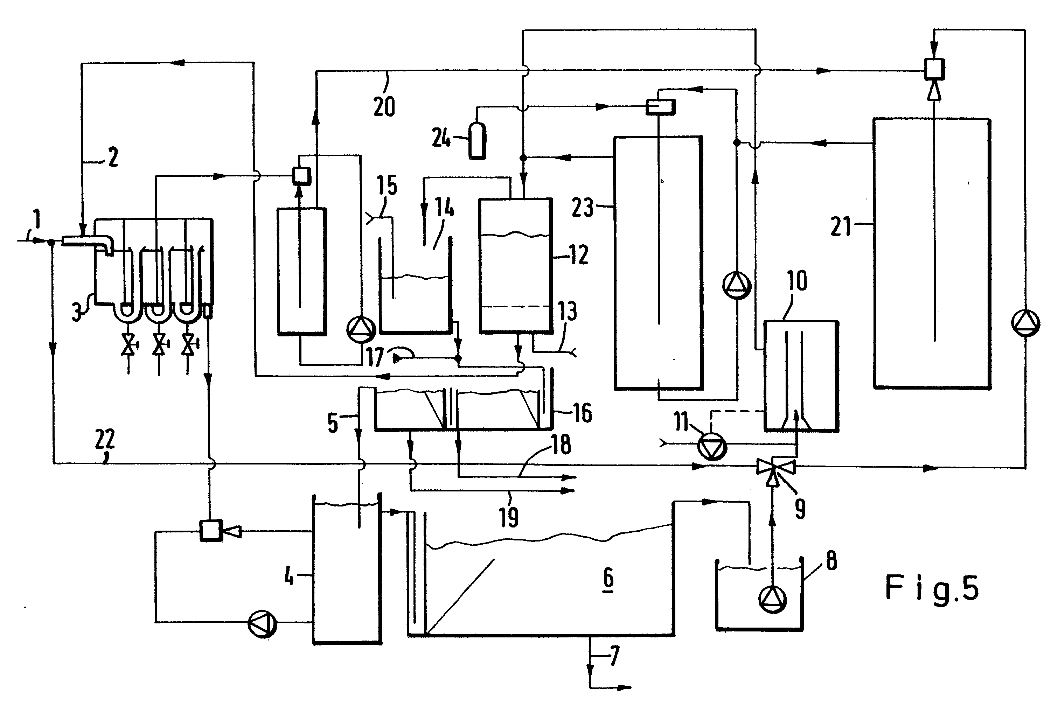

In Fig. 5 ist schematisch eine Vorrichtung zur Durchführung des erfindunsgemäßen Verfahrens veranschaulicht.

Hierbei bilden zwei Leitungen 1 und 2 eine Mischvorrichtung zum Mischen des durch die Leitung 1 zugeführten Abwassers bzw. Schlamms und des durch die Leitung 2 zugeführten Flockungsmittels, bei welchem es sich um eine Metallsalzlösung handelt.

Das organische Stoffe enthaltende Abwasser bzw. der Schlamm wird über die Leitung 1 zugeführt und die Metallsalzlösung über die Leitung 2 zugemischt. Diese Mischung wird in einen Flockulator 3 eingeleitet, in welchem die Mischung entgast wird. Die Entgasung erfolgt bevorzugt durch Erzeugen eines Vakuums oder durch Strippen. Vom Flockulator 3 wird die aus den gebildeten Metallhydroxyden und dem organischen Schlamm bestehende Mischung in einen Vorratsbehälter 4 überführt, welcher außerdem eine Zuleitung 5 aufweist, die den Metallhydroxyd-schlamm aus der Waschwasseraufbereitung führt.

In dem Vorratsbehälter wird unter Umwälzen der Metallhydroxydschlamm mit der Schlammischung vermengt.

In einer an den Vorratsbehälter 4 angeschlossenen Flotationsvorrichtung 6 wird das Reinwasser von dieser Schlammischung abgetrennt und über die Leitung 7 zur weiteren Verwendung abgeführt. Die verbleibende Schlammischung wird in ein Gefäß 8 überführt, von wo sie über einen Dreiwegehahn 9 in einen Reaktor 10 gepumpt werden kann.

In dem Reaktor 10 wird die Schlammischung unter Senkung des pH-Wertes mit Säure versetzt, welche über eine Pumpe 11 eindosiert werden kann.

Die dabei erhaltene Suspension wird in einen Filterbehälter 12 weitergeleitet, in welchem der organische Schlamm von der durch die Ansäuerung gebildeten Metallsalzlösung abgetrennt wird. Die Metallsalzlösung wird über die Leitung 2 als Flokkungsmittel in die Mischstufe zurückgeführt.

Der verbleibende, nun weitgehend aus organischen Bestandteilen bestehende Schlamm wird mit einem über die Leitung 13 zugeführten Spülwasser aus dem Filterbehälter 12 ausgespült und in einen Waschbehälter 14 übertragen.

In dem Waschbehälter 14 wird der Schlamm mit Waschwasser gewaschen, welches über die Leitung 15 eingeleitet wird. Waschwasser und Schlamm gelangen sodann in eine Flotationskaskade 16. In der Flotationskaskade 16 kann zusätzlich über eine Leitung 17 eine weitere Säure beigemischt werden, um zu gewährleisten, daß sämtliche Metallsalzgehalte in Lösung gehen. Die Leitung 17 speist die Verbindungsleitung zwischen dem Waschbehälter 14 und der Flotationskaskade 16.

Der nunmehr vollständig gereinigte Schlamm wird über die Leitung 18 abgeführt und kann nach Eindickung und Trocknung in der Pyrolysestufe verbrannt werden. Dieser Schlamm ist optimal salzfrei.

In der letzten Stufe der Flotationskaskade 16 wird der pH-Wert des Waschwassers vorzugsweise durch Kalk angehoben, so daß ein Metallhydroxydschlamm ausfällt, der über die oben erwähnte Leitung 5 dem Vorratsbehälter zugeführt wird.

Das durch diese Fällung salzfreie Waschwasser wird über die Leitung 19 abgezogen.

Anstelle der Flotationsvorrichtung 6 kann eine Sedimentiervorrichtung in Form eines einfachen Beckens oder eines Schrägklärers eingesetzt werden. Bei amphotheren Metallen, wie beispielsweise Aluminium, kann statt der Ansäuerung im Reaktor 10 die Lösung des Flockungsmittels auch durch eine Lauge erfolgen, welche dann über die Dosierpumpe 11 eingespeist wird.

Als Reaktor 10 wird ein Rührkessel oder vorzugsweise ein Schlaufenreaktor verwendet. Die Flotationskaskade besteht bevorzugt aus zwei Elektroflotationsvorrichtungen.

Das vom Flockulator 3 abgezogene Gas wird über die Leitung 20 einem Reaktor 21 zugeführt. Bei dem Reaktor 21 handelt es sich um einen Gaswäscher, in welchem auch diesem Gas das enthaltene $CO_2$ bzw. $SO_2$ ausgewaschen wird. Bei den oben beschriebenen Verfahrensvarianten wird dieser Reaktor derart ausgebildet, daß auch eine Entstickung und/oder Rauchgaswäsche bezüglich der $CO_2$- und $SO_2$-Bestandteile durchgeführt werden kann. Der Gaswäscher, welcher als Reaktor 2 eingesetzt wird, kann als Blasensäule, Strahlwäscher, Sprühturm, Waschkolonne oder Venturiwäscher ausgebildet sein.

Das Auswaschen selbst erfolgt entweder mittels des Abwassers, welches über die Leitung 22 von der Leitung 1 abgezogen werden kann, oder mittels der Schlammischung in dem Gefäß 8.

Die Zufuhr des Abwassers oder der Schlammischung zum Reaktor 21 erfolgt jeweils über den Dreiwegehahn 9. Das im Reaktor erhaltene wässrige Gemisch, welches $CO_2$ und/oder $SO_2$ enthält,

wird einem weiteren Reaktor 23 zugeführt. Dort wird zusätzlich $CO_2$ zur Reaktion zugegeben.

Der Reaktor 23 ist bevorzugt als Submersreaktor ausgebildet. Dort kann durch eine Vorratsbehälter 24 zusätzlich $CO_2$ eingeleitet werden, welches die im Verfahrensverlauf verlorengegangene Kohlensäure ersetzt.

Das aus dem Reaktor 23 austretende $CO_2$- und/oder $SO_2$-Salze enthaltende Gemisch wird der vom Reaktor 10 kommenden Suspension beigemischt, ehe diese in den Filterbehälter 12 eingeleitet wird.

Wie erwähnt, wird die zum Einsatz kommende Kohlensäure und/oder schweflige Säure bevorzugt aus Rauchgas gewonnen, in welchem sie als gasförmige Anhydride vorliegen.

Als Flockungsmittel finden bevorzugt zweiwertige Eisensalze als Metallsalze Verwendung.

Vor dem Filterbehälter 12 und dem Flockulator 3 kann ein Vorabscheider, beispielsweise ein Schrägklärer oder eine Zentrifuge angeordnet sein.

**Ansprüche**

1. Verfahren zum Schließen der Flockungsmittelkreisläufe bei der Reinigung von Wasser und Abwasser, welche chemisch ausfällbare bzw. organische Abfallstoffe enthalten, mit folgenden Verfahrensschritten:

a) Mischen des Abwassers oder Abwasserschlamms mit einer Metallsalzlösung als Flockungsmittel,

b) Entgasen des Abwasser-Flockungsmittelgemisches, wobei das erhaltene Gas aufgefangen wird,

c) Abtrennen des Reinwassers von der ausgeflockten Mischung aus Metallhydroxyden und organischem Schlamm,

d) Senkung des pH-Wertes der Mischung bis zur Lösung der Metallsalze, wobei diese Metallsalzlösung als Flockungsmittel im Kreislauf zum Verfahrensschritt a) zurückgeführt wird und der im wesentlichen aus organischen Bestandteilen bestehende Schlamm in eine Waschvorrichtung übergeführt wird,

**gekennzeichnet durch** folgende Verfahrensschritte:

e) Auswaschen des Schlamms mit Waschwasser,

f) Trennen des gewaschenen Schlamms und des Waschwassers,

g) Erhöhung des pH-Wertes des Waschwassers bis zur Fällung der im Waschwasser gelösten Metallsalze als Metallhydroxydschlamm und

h) Beimischung des Metallhydroxydschlammes zu dem Abwasser-Flockungsmittelgemisch zwischen den Verfahrensschritten b) und c).

2. Verfahren nach Anspruch 1, dadurch gekennzeichnet, daß aus dem im Verfahrensschritt b) aufgefangenen Gas mittels der im Verfahrensschritt c) erhaltenen Schlammischung $CO_2$ ausgewaschen wird, welche der Mischung nach dem Verfahrensschritt c) zugeführt wird.

3. Verfahren nach Anspruch 1 oder 2, dadurch gekennzeichnet, daß der Verfahrensschritt b) bei Lösung mit $CO_2$ durchgeführt wird.

4. Verfahren nach Anspruch 2, dadurch gekennzeichnet, daß bei Verwendung von frischem Rauchgas zusätzlich $SO_2$ ausgewaschen wird.

5. Verfahren nach Anspruch 1, dadurch gekennzeichnet, daß dem Restschlamm vor der Abtrennung des Waschwassers Säure zugesetzt wird.

6. Verfahren nach Anspruch 2 oder 3, dadurch gekennzeichnet, daß das Auswaschen von $CO_2$ und/oder $SO_2$ mehrstufig erfolgt, indem der Schlamm mit $SO_2$ gelöst, anschließend aus dem so entstandenen Regenerat die Metallsalze ausgeflockt und schließlich wieder mit $CO_2$ gelöst werden.

7. Verfahren nach einem der Ansprüche 2 bis 6, dadurch gekennzeichnet, daß im Verfahrensschritt d) $CO_2$ zugesetzt wird.

8. Verfahren nach einem der vorstehenden Ansprüche, dadurch gekennzeichnet, daß die Erhöhung des pH-Wertes im Verfahrensschritt g) durch Kalkzugabe bzw. Kalkmilchzugabe erfolgt.

9. Verfahren nach einem der vorstehenden Ansprüche, dadurch gekennzeichnet, daß im Falle einer Übersäuerung der Mischung Alkali zugeführt wird.

10. Verfahren nach einem der vorstehenden Ansprüche, dadurch gekennzeichnet, daß die Senkung des pH-Wertes der Mischung im Verfahrensschritt d) durch Zuführung der Produkte einer Rauchgasentschwefelung erfolgt.

11. Verfahren nach einem der vorstehenden Ansprüche, dadurch gekennzeichnet, daß die Senkung des pH-Wertes der Mischung im Verfahrensschritt d) durch Zuführung von Kohlensäure erfolgt, daß $CO_2$ dem Kreislauf zugeführt wird und daß $CO_2$ aus Rauchgas gewonnen wird.

12. Verfahren nach einem der Ansprüche 10 und 11, dadurch gekennzeichnet, daß eine Entstickung des Rauchgases durchgeführt wird, indem das Rauchgas mit einer Dithionit-Lösung gewaschen wird, welche nach Abtrennung der Stickstoffverbindungen im Kreislauf geführt wird.

13. Verfahren nach einem der Ansprüche 10 bis 12, dadurch gekennzeichnet, daß das Rauchgas einer an den Verfahrensschritt h) anschließenden Schlamm-Verbrennung oder Pyrolyse verwendet wird.

14. Verfahren nach einem der vorstehenden Ansprüche, dadurch gekennzeichnet, daß aus der gelösten Phase des im Kreislauf geführten Flockungsmittels toxische Schwermetall-Ionen, wie Zink und Cadmium, abgetrennt werden und daß die Abtrennung elektrolytisch und/oder durch spezifische Fällung erfolgt.

15. Verfahren nach einem der vorstehenden Ansprüche, dadurch gekennzeichnet, daß aus der gelösten Phase des im Kreislauf geführten Flockungsmittels eine Fällung von Phosphaten durchgeführt wird.

16. Vorrichtung zur Durchführung des Verfahrens nach einem der vorstehenden Ansprüche, mit

einer Mischeinrichtung (1, 2) zum Mischen von Abwasser bzw. Abwasserschlamm mit einem durch eine Metallsalzlösung gebildeten Flockungsmittel,

einer an diese angeschlossenen Entgasungsstufe (Flockulator) (3) zum Entgasen der Mischung mit einem Gasauslaß,

einer Flotationsvorrichtung (6) zum Abtrennen des Reinwassers von der Mischung mit einem Reinwasserauslaß (7) und einem Auslaß für Schlammischung mit einem an diesen angeschlossenen Reaktor (10) mit Einrichtungen (11) zum Eindosieren von Säure und einem Auslaß, der zu einem Filterbehälter (12) führt, wobei der Filterbehälter (12) einen Schlammauslaß und einen Auslaß für die Metallsalzlösung aufweist, welcher über eine Leitung (2) an die Mischeinrichtung (1,2) angeschlossen ist, gekennzeichnet durch einen Waschbehälter (14), der über eine Leitung (13) an den Schlammauslaß des Filterbehälters (12) angeschlossen ist und einen Waschwasseranschluß aufweist,

eine Flotationskaskade (16) zur Trennung von Waschwasser und organischem Schlamm und zur separaten Trennung von Metallsalzschlamm vom Waschwasser, welche an den Schlammauslaß des Waschbehälters (14) angeschlossen ist, und

einen Vorratsbehälter (4), welcher über eine Leitung (5) an den Metallsalzschlammauslaß der Flotationskaskade (16) angeschlossen ist, wobei der Vorratsbehälter (4) zwischen den Flockulator (3) und der Flotationsvorrichtung (6) angeordnet und an diese angeschlossen ist.

17. Vorrichtung nach Anspruch 16, dadurch gekennzeichnet, daß der Gasauslaß der Entgasungsstufe (3) an einen als Gaswäscher ausgebildeten Druckreaktor (21) angeschlossen ist, daß die Flotationskaskade (16) als Elektroflotationseinrichtung ausgebildet ist und daß dem Druckreaktor (21) ein weiterer als Submersreaktor (23) ausgebildeter Reaktor nachgeschaltet ist.

18. Vorrichtung nach Anspruch 16 oder 17, dadurch gekennzeichnet, daß in den durch die Leitung (2) gebildeten Flockulationsmittel-Kreislauf eine Trenneinrichtung für toxische Metalle und Phosphate eingeschlatet ist.

19. Vorrichtung nach einem der Ansprüche 17 oder 18, dadurch gekennzeichnet, daß der Druckreaktor (21) einen Anschluß an eine Rauchgasleitung aufweist, daß die Rauchgasleitung die Abgase der nachgeschalteten Schlammpyrolyse oder Verbrennung führt, daß der Gaswäscher Einrichtungen zur Rauchgasentstickung enthält, und daß die Einrichtungen zur Rauchgasentstickung durch einen Dithionit-Kreislauf gebildet sind.

## Claims

1. A process for closing the flocculation-media circuits during the purification of water and effluent containing chemically precipitate and/or organic waste substances, comprising the following process stages:
   a) mixing the effluent or effluent sludge with a metallic salt solution by way of flocculation agent,
   b) degasification of the effluent-flocculation agent mixture whilst collecting the resulting gas,
   c) separating the pure water from the flocculated mixture consisting of metal hydroxides and organic sludge,
   d) reducing the pH-value of the mixture up to the dissolution of the metallic salts, said metallic salt solution being returned as flocculation agent in circuit to process stage a) and the sludge which consists essentially of organic components being transferred to a washing plant,

   characterised by the following process stages:

   e) washing the sludge out with washing water,
   f) separating the washed sludge from the washing water,
   g) increasing the pH value of the washing water up to precipitation of the metallic salts contained in solution in the washing water in the form of metal hydroxide sludge and
   h) admixing the metal hydroxide sludge to the effluent-flocculation agent mixture between process stages b) and c).

2. Process according to claim 1, characterised in that the gas collected from process stage b) is washed by means of the sludge mixture obtained in process stage c) to wash out $CO_2$ which is added to the mixture after process stage c).

3. Process according to claim 1 or 2, characterised in that process stage b) is applied in the case of solution with $CO_2$.

4. Process according to claim 2, characterised in that in the case of using fresh flue gas $SO_2$ is additionally washed out.

5. Process according to claim 1, characterised in that an acid is added to the residual sludge prior to separating the washing water therefrom.

6. Process according to claim 2 or 3, characterised in that the washing-out of $CO_2$ and/or $SO_2$ is applied in several stages involving the dissolving of the sludge with $SO_2$, subsequently flocculating the metallic salts out of the resulting regenerate and finally dissolving them again with $CO_2$.

7. Process according to any one of claims 2 to 6, characterised in that $CO_2$ is added during pro-

cess stage d).

8. Process according to any preceding claim, characterised in that the increase of the pH-value is obtained in process stage g) by addition of lime or lime milk.

9. Process according to any preceding claim, characterised in that in the event of overacidification alkali is added to the mixture.

10. Process according to any preceding claim, characterised in that the reduction of pH-value of the mixture is executed in the course of process stage d) by the addition of the products of a flue gas desulphurization process.

11. Process according to any preceding claim, characterised in that the reduction of pH-value of the mixture in process stage d) is obtained by an addition of carbon dioxide, that $CO_2$ is introduced into the circuit and in that $CO_2$ is obtained from flue gas.

12. Process according to either claim 10 or 11, characterised in that the fluegas is subjected to denitrification by being washed with a dithionite solution which is returned in circuit after separation of the nitrogen compounds.

13. Process according to either claim 10,11,or 12, characterised in that the fluegas used is derived from sludge combustion or pyrolysis following process stage h).

14. Process according to any preceding claim, characterised in that toxic heavy metal ions such as zinc and cadmium are separated out of the solution phase of the circulated flocculating medium and that such separation is obtained electrolytically and/or by specific precipitation.

15. Process according to any preceding claim, characterised in that a precipitation of phosphates is applied from the dissolved phase of the circulated flocculation medium.

16. Apparatus for the application of the process according to any preceding claim, comprising

a mixing device (1,2) for mixing effluent or effluent sludge with a flocculation medium formed by a metallic salt solution,

arranged in succession therewith, a degasification stage (flocculator) (3) for degasifying the mixture with a gas discharge outlet,

a flotation unit (6) for separating pure water from the mixture having a pure water discharge outlet (7) and an outlet for sludge mixture with a reactor (10) connected thereto equipped with means (11) for dispensing measured doses of acid and an outlet leading to a filter vessel (12) said filter vessel (12) comprising a sludge-discharge and an outlet for the metallic salt solution which is connected by a pipeline (2) to the mixing device (1,2), characterised by

the provision of a washing vessel (14) connected via pipeline (13) to the sludge-discharge outlet of the filter vessel (12) and having a washing-water connection,

a flotation cascade (16) for separating washing water and organic sludge and the separate separation of metallic salt sludge from washing water, which is connected to the sludge-discharge outlet of the washing vessel (14), and

a reservoir vessel (4) connected via pipeline (5) to the metallic salt sludge outlet of the flotation cascade (16) said reservoir vessel (4) being arranged between the flocculator (3) and the flotation device (6) and being connected thereto.

17. Apparatus according to claim 16, characterised in that the gas discharge outlet of the degasification stage (3) is connected to a gas washer-type pressure reactor (21), that the flotation cascade (16) is constructed as an electroflotation plant and in that a further reactor of the submersion reactor type (23) is arranged downstream of the pressure reactor (21).

18. Apparatus according to claim 16 or 17, characterised in that the flocculation-medium circulation pipe (2) includes a separator device for separating out toxic metals and phosphates.

19. Apparatus according to either claim 17 or 18, characterised in that the pressure reactor (21) has a connection to a fluegas pipe, that the fluegas pipe carries the waste gases of the subsequently applied sludge pyrolysis or combustion, that the gas washer comprises means for removal of nitrogen from the fluegas and that said means for fluegas denitrification consist of a dithionite circuit.

**Revendications**

1. Procédé pour boucler les circuits de fluide de floculation lors de l'épuration d'eau et d'eau de rejet, qui contiennent des substances de rejet pouvant être évacuées par voie chimique ou organique, qui comprend les étapes de procédé suivantes:

   a) Mélange de l'eau de rejet ou de boue d'eau de rejet avec une solution de sel métallique comme fluide de floculation,

   b) Dégazage du mélange fluide de floculation-eau de rejet, le gaz obtenu étant capté,

   c) Séparation de l'eau purifiée d'avec le mélange floculé composé de flocons d'hydroxydes métalliques et de boue organique,

   d) Abaissement de la valeur du pH du mélange jusqu'à l'obtention de la dissolution des sels métalliques, cette solution de sel métallique étant recyclée dans le circuit en tant que fluide de floculation pour l'étape a) du procédé et la boue, qui se compose essentiellement d'éléments constituants organiques, étant transvasée dans un dispositif de lavage,

   caractérisé par les étapes de procédé suivantes:

   e) Débourbage de la boue avec de l'eau de lavage,

   f) Séparation de la boue lavée et de l'eau de lavage,

   g) Accroissement de la valeur du pH jusqu'à l'obtention d'une précipitation des sels métalliques dissous dans l'eau de lavage, sous forme de boue d'hydroxyde métallique, et

   h) Addition et mélange de la boue d'hydroxyde métallique au mélange d'eau de rejet-fluide de floculation, entre les étapes de procédé b) et c).

2. Procédé selon la revendication 1, caractérisé en ce qu'à partir du gaz capté lors de l'étape de procédé b), on élimine, au moyen du mélange de boue obtenu dans l'étape c) du procédé, le $CO_2$ qui est amené au mélange après l'étape de procédé c).

3. Procédé selon la revendication 1 ou 2, caractérisé en ce que l'étape de procédé b) est effectuée lors de la dissolution avec le $SO_2$.

4. Procédé selon la revendication 2, caractérisé en ce qu'on élimine en plus du $SO_2$ dans le cas de l'utilisation de gaz de combustion froids.

5. Procédé selon la revendication 1, caractérisé en ce que de l'acide est ajouté à la boue restante avant la séparation de l'eau de lavage.

6. Procédé selon la revendication 2 ou 3, caractérisé en ce que l'élimination du $CO_2$ et/ou du $SO_2$ s'effectue en plusieurs étapes, dans lesquelles la boue est diluée avec le $SO_2$. ce qui est suivi par la floculation des sels métalliques apparus à partir du produit de régénération obtenu et finalement d'une nouvelle dilution avec le $CO_2$.

7. Procédé selon l'une des revendications 2 à 6, caractérisé en ce que du $CO_2$ est ajouté à l'étape d) du procédé.

8. Procédé selon l'une des revendications précédentes, caractérisé en ce que l'accroissement de la valeur du pH selon l'étape g) du procédé s'effectue par addition de chaux ou par addition de lait de chaux.

9. Procédé selon l'une des revendications précédentes, caractérisé en ce que de l'alcali est amené dans le cas d'une hyperacidification du mélange.

10. Procédé selon l'une des revendications précédentes, caractérisé en ce que l'abaissement de la valeur du pH du mélange selon l'étape d) du procédé s'effectue par apport des produits d'une désulfuration du gaz de combustion.

11. Procédé selon l'une des revendications précédentes, caractérisé en ce que l'abaissement de la valeur du pH du mélange selon l'étape d) du procédé s'effectue par apport de dioxyde de carbone, que du $CO_2$ est amené dans le circuit, et le $CO_2$ est obtenu à partir du gaz de combustion.

12. Procédé selon l'une des revendications 10 ou 11, caractérisé en ce qu'une dénitruration du gaz de combustion est effectuée, dans laquelle le gaz de combustion est lavé avec une solution de dithionite, laquelle est amenée dans le circuit après la séparation des composés azotés.

13. Procédé selon l'une des revendications 10 à 12, caractérisé en ce que l'on utilise les gaz de combustion d'une combustion de boue ou d'une pyrolyse se déroulant à la suite de l'étape h) du procédé.

14. Procédé selon l'une des revendications précédentes, caractérisé en ce que des ions de métal lourd toxiques, comme le zinc ou le cadmium, provenant de la phase diluée du fluide de floculation amené dans le circuit, sont séparés et la séparation s'effectuant électrolytiquement et/ou par une précipitation par gravité.

15. Procédé selon l'une des revendications précédentes, caractérisé en ce qu'une précipitation des phosphates est effectuée à partir de la phase diluée du fluide de floculation amené dans le circuit.

16. Dispositif de mise en oeuvre du procédé selon l'une des revendications précédentes, comportant:

un dispositif de mélange (1,2) pour mélanger l'eau de rejet ou la boue d'eau de rejet avec un fluide de floculation formé par une solution de sel métallique,

un étage de dégazage (floculateur) (3) relié à celui-ci, pour dégazer le mélange avec production d'un échappement de gaz,

un dispositif de flottation (6) pour séparer l'eau épurée du mélange au moyen d'une évacuation d'eau épurée (7) et d'une évacuation pour la mélange de boue, comportant un réacteur (10) relié à ceux-ci avec des dispositifs (11) pour le dosage de l'acide et une évacuation, qui mène à un réservoir de filtrage (12), le réservoir de filtrage (12) présentant une évacuation de boue et une évacuation pour la solution de sel métallique, le réservoir étant rélié au dispositif de mélange (1,2) par l'intermédiaire d'une canalisation (2), caractérisé par

un réservoir de lavage (14), qui est relié à l'évacuation de boue du réservoir de filtrage (12) par l'intermédiaire d'une canalisation (13) et qui présente un branchement d'eau de lavage,

une cascade de flottation (16) pour la séparation de l'eau de lavage et de la boue organique et pour la séparation, effectuée séparément, de la boue de sel métallique de l'eau de lavage, la cascade étant reliée à l'évacuation de boue du réservoir de lavage (14), et

un réservoir de stockage (4), relié à l'évacuation de boue de sel métallique de la cascade de flottation (16) par l'intermédiaire d'une canalisation (5), le réservoir de stockage (4) étant disposé entre le floculateur (3) et le dispositif de flottation (6) et est relié à ceux-ci.

17. Dispositif selon la revendication 16, caractérisé en ce que l'échappement de gaz de l'étage de dégazage (3) est relié à un réacteur sous pression réalisé sous la forme d'un laveur de gaz, que la cascade de flottation (16) est réalisée sous la forme d'un dispositif d'électro-flottation, et qu'un autre réacteur, réalisé sous la forme d'un réacteur en immersion (23), est mis en circuit à la suite du réacteur sous pression (21).

18. Dispositif selon la revendication 16 ou 17, caractérisé en ce qu'un dispositif de séparation pour les métaux et phosphates toxiques est mis en circuit dans le circuit de fluide de floculation formé par la canalisation (2).

19. Dispositif selon l'une des revendications 17 ou 18, caractérisé en ce que le réacteur sous pression (21) présente un raccordement situé sur une canalisation pour gaz de combustion, que la canalisation pour gaz de combustion conduit les gaz d'échappement de la pyrolyse ou de la combustion de la boue qui est placée en aval , le laveur de gaz contenant des dispositifs pour la dénitruration du gaz de combustion, et les dispositifs pour la dénitruration du gaz de combustion étant formés par un circuit de dithionite.

# Fig.1

Schlamm

Mischen — 3 ... Flockungsmittel (FM)

3 — Entgasen

Gaswäsche

RW

Trennen (RW) 6
Schlamm u. Reinwasser

FM-Lösung

Senken pH-Wert — 10
Schlamm (S)

Waschwasser (WW)

FM-Schlamm

14

Waschen — WW — Erhöhen pH-Wert — 16

Lauge

Salzfeier Schlamm — 18

RW

S — Verbrennung

F i g.2

F i g.3

Fig.4

Fig.5